# EUROPEAN PATENT APPLICATION

(11) **EP 4 661 089 A2**
(43) Date of publication of application: **10.12.2025**
(21) Application number: 25180327.6
(22) Date of filing: 03.06.2025
(51) Int. Cl.: H01M 4/04, H01M 10/0562, H01M 10/0585, H01M 4/13, H01M 4/131, H01M 4/58, H01M 4/66

(54) **BATTERY SUBSTRATE, SECONDARY BATTERY COMPONENT AND METHOD OF PRODUCING THE SAME**

(30) Priority: 06.06.2024 JP 2024092106; 22.04.2025 JP 2025070378
(71) Applicant: CANON KABUSHIKI KAISHA, Tokyo 146-8501 (JP)
(72) Inventor: TANIUCHI, Hiroshi, Tokyo (JP); ARAKAWA, Mitsuyoshi, Tokyo (JP); KUBO, Kenta, Tokyo (JP); USAMI, Hirokazu, Tokyo (JP); NAKAZAWA, Ikuo, Tokyo (JP); MASADA, Yohei, Tokyo (JP); AOTANI, Takaharu, Tokyo (JP)
(74) Representative: WESER & Kollegen Patentanwälte PartmbB

(57) **Abstract**

A battery substrate applied to a secondary battery, comprising: a first substrate (103) comprising a resin; an adhesive layer (102) having one surface adhered to the first substrate; a particle layer (601) comprising at least one selected from the group consisting of a solid electrolyte, an active material and a current collector material and disposed on the other surface opposite to the one surface of the adhesive layer (102) ; and a second substrate (101) disposed in a region of the other surface where the particle layer (601) is not disposed, wherein the second substrate (101) is disposed so as to support a periphery of a region where the particle layer (601) is disposed in at least two directions.

## Description

### TECHNICAL FIELD

The present disclosure relates to a battery substrate, a secondary battery component and a method of producing the same.

### BACKGROUND

Generally, secondary batteries are composed of electrodes such as a positive electrode and a negative electrode and an electrolyte, and are charged and discharged when ions move between the electrodes with the electrolyte therebetween. Such secondary batteries are used in a wide range of applications from small devices such as mobile phones to large devices such as electric vehicles.

In recent years, in order to secure the safety, high capacity, and high output of secondary batteries, all-solid-state batteries in which conventional organic electrolyte solutions are replaced with solid electrolytes have been studied. In all-solid-state batteries, in the ion insertion and removal process during charging or discharging, ion conduction paths between a positive electrode active material, a solid electrolyte, and a negative electrode active material are directly linked to battery performance, and thus it is required to precisely arrange the positive electrode active material, the solid electrolyte, and the negative electrode active material three-dimensionally.

Japanese Patent Laid-Open No. 2019-137061 describes a method of arranging a positive electrode active material, a solid electrolyte, and a negative electrode active material, which are battery materials, in an arbitrary three-dimensional pattern. In the method described in Japanese Patent Laid-Open No. 2019-137061, a battery material layer in which a positive electrode active material, a solid electrolyte, a negative electrode active material and the like are arranged in an arbitrary pattern is formed on a substrate having adhesive properties on both surfaces (hereinafter referred to as an adhesive layer). Then, a plurality of battery material layers supported on the adhesive layer are laminated and the adhesive layers are then removed by heating, and thus a secondary battery component in which the battery materials are arranged in an arbitrary three-dimensional pattern can be produced. The adhesive properties on both surfaces of the adhesive layer are achieved by applying a pressure-sensitive adhesive, and the adhesive layer is provided to support the battery material, fix the positions of the layers when the plurality of battery material layers are laminated, and prevent the battery material pattern from collapsing.

In recent years, as secondary batteries have become widespread, there have been increasing demands for higher performance, lower cost, and larger sizes, and all-solid-state batteries have also been required to satisfy these demands. In the method of producing a battery substrate for an all-solid-state battery described in Japanese Patent Laid-Open No. 2019-137061, reducing the thickness of the adhesive layer is provided as one solution. When the thickness of the adhesive layer is reduced, it is possible to reduce the heat treatment time in the adhesive layer removal process, shorten the tact time, and reduce the thermal load on the battery material. In addition, when the adhesive layer is removed, it is possible to reduce a risk of a battery material arrangement becoming disordered. In this manner, reducing the thickness of the adhesive layer can contribute to improving performance and reducing the cost of all-solid-state batteries.

### SUMMARY

However, when the thickness of the adhesive layer is reduced in the method described in Japanese Patent Laid-Open No. 2019-137061, in a process of separating the battery material from a plate used for forming a pattern (hereinafter referred to as a plate) or from a holding member that holds the adhesive layer (hereinafter referred to as a holding member), damage such as chipping or tearing may occur at the ends of the battery substrate, and wrinkles may occur in the battery substrate due to extension or the like. In addition, since the adhesive layer alone cannot retain the shape, while the adhesive layer is separated from the holding member and laminated, folds and wrinkles occur in the adhesive layer, the adhesion surfaces of the adhesive layer are bonded to each other, and thus the battery material pattern may become disordered. This phenomenon becomes more significant when the area of the battery substrate increases, and is a challenge for larger batteries.

Japanese Patent Laid-Open No. 2002-351325 describes a method of separating a seal from a seal holding member without damaging it. In the method described in Japanese Patent Laid-Open No. 2002-351325, when a frame part is provided around a seal part, and the frame part is separated first, the seal part is easily separated and damage to the seal is prevented. It is possible to prevent damage to the ends of the battery substrate after separation by this method, but it is not possible to completely solve the problem of extension of the adhesive layer during separation, and it is difficult to prevent deformation and bonding of the adhesive layer after separation.

As described above, as a method of producing a secondary battery component in which battery materials are arranged in an arbitrary three-dimensional pattern, there is a production method in which a battery substrate on which battery materials are arranged is laminated on an adhesive layer, and thus a battery material pattern does not collapse. However, when the adhesive layer of the battery substrate is thin, wrinkles may occur in the substrate when the adhesive layer is separated from the plate or the holding member, the substrate alone may not be able to retain the shape of the substrate during lamination, causing the pattern to collapse, and it may be difficult to stably produce secondary battery components.

According to at least one aspect of the present disclosure, when a battery material particle layer and a second substrate arranged around the particle layer are provided with an adhesive layer therebetween, the second substrate structurally reduces extension and deformation of the adhesive layer. In addition, when the battery substrate is used, it is possible to produce a secondary battery component in which battery material particles are arranged in an arbitrary three-dimensional pattern without collapsing the pattern of the particle layer on the adhesive layer of the battery substrate.

The present disclosure in its first aspect provides a battery substrate as specified in claim 1. Optional features are specified in claim 2 to 15.

The present disclosure in its second aspect provides a method of producing the battery substrate as specified in claims 16 and 18. Optional features are specified in claims 17 and 19.

The present disclosure in its third aspect provides a secondary battery component as specified in claim 20.

The present disclosure in its fourth aspect provides a method of producing a secondary battery component as specified in claim 21. Optional features are specified in claims 22 to 25.

At least one aspect of the present disclosure provides a battery substrate in which wrinkles and adhesions are less likely to occur, and battery material particles are arranged in an arbitrary three-dimensional pattern without collapsing a particle arrangement pattern in the particle layer. In addition, at least one aspect of the present disclosure provides a method of producing the battery substrate. In addition, at least one aspect of the present disclosure provides a secondary battery component in which the battery substrate is used and battery material particles are arranged in a pattern, and a method of producing the same.

Features of the present disclosure will become apparent from the following description of embodiments with reference to the attached drawings. The following description of embodiments is described by way of example.

### BRIEF DESCRIPTION OF THE DRAWINGS

FIGS. 1A to 1H are diagrams showing an example of a configuration of a battery substrate;
FIGS. 2A to 2E are diagrams showing an example of a configuration of a battery substrate of a conventional example;
FIGS. 3A to 3F are diagrams showing an example of the shapes of a battery substrate and a second substrate;
FIG. 4 is a flowchart showing a method of producing a battery substrate;
FIGS. 5A to 5H are diagrams showing a method of producing a battery substrate;
FIG. 6 is a flowchart showing a method of producing a battery substrate having slits;
FIGS. 7A to 7H are diagrams showing a method of producing a battery substrate having slits;
FIGS. 8A to 8H are diagrams showing another method of producing a battery substrate having slits;
FIGS. 9A and 9B are diagrams showing an example of the results of Example 1 and Comparative Example 1;
FIG. 10 is a flowchart showing a method of producing a secondary battery component;
FIGS. 11A to 11H are diagrams showing a method of producing a secondary battery component;
FIG. 12 is a flowchart showing another method of producing a secondary battery component;
FIGS. 13A to 13H are diagrams showing another method of producing a secondary battery component;
FIGS. 14A to 14D are diagrams showing an example of the results of Example 2 and Comparative Example 2.

### DESCRIPTION OF THE EMBODIMENTS

In the present disclosure, the expression of "from XX to YY" or "XX to YY" indicating a numerical range means a numerical range including a lower limit and an upper limit which are end points, unless otherwise specified. Also, when a numerical range is described in a stepwise manner, the upper and lower limits of each numerical range can be arbitrarily combined.

In addition, in the present disclosure, for example, descriptions such as "at least one selected from the group consisting of XX, YY and ZZ" mean any of XX, YY, ZZ, the combination of XX and YY, the combination of XX and ZZ, the combination of YY and ZZ, and the combination of XX, YY, and ZZ.

Preferred embodiments of the present disclosure are described in the following with reference to the figures, but the present disclosure is not limited to or by the following embodiments. In the following description, the same number is assigned in the figures to structures that have the same function, and in some instances a description thereof may be omitted.

### Configuration of Battery Substrate

A battery substrate according to one embodiment of the present disclosure will be described. The battery substrate is applied to a secondary battery.

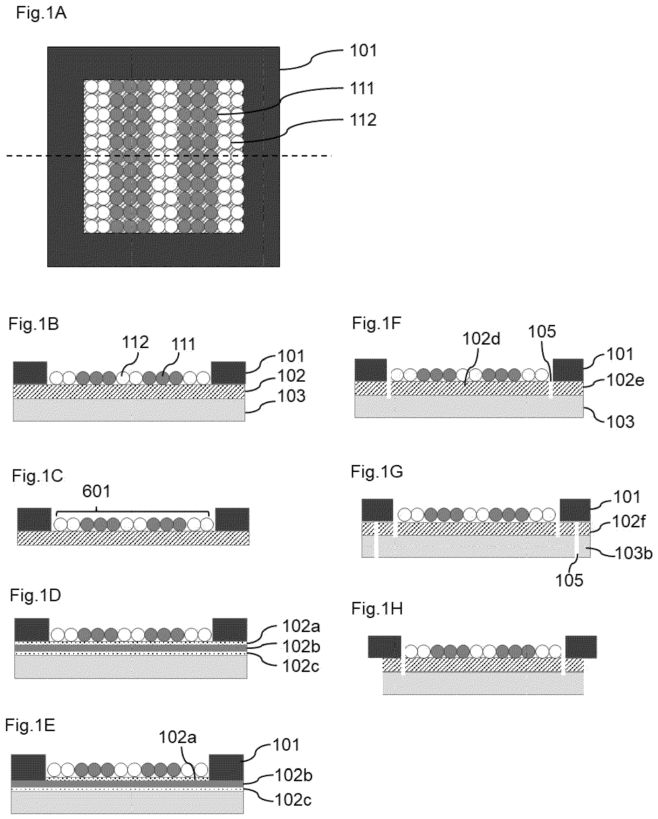

FIGS. 1A to 1H are diagrams showing the configuration of the battery substrate, FIG. 1A is a schematic diagram showing the top surface of the battery substrate, and FIG. 1B is a schematic diagram showing a cross section of the center (part indicated by the dotted line in FIG. 1A) of the battery substrate.

In the drawings, reference numeral 101 denotes the second substrate, 102 denotes the adhesive layer, and 103 denotes the first substrate. In addition, reference numerals 111 and 112 denote battery material particles, 111 denotes first particle P1, and 112 denotes second particle P2. The first particle P1 and the second particle P2 are a solid electrolyte, an active material or a current collector material.

In the following description, a case in which, as a battery material pattern, the first particle P1 and the second particle P2 are arranged in a single layer in a stripe-like pattern will be described.

The battery substrate has a first substrate 103 comprising a resin and an adhesive layer 102 having one surface adhered to the first substrate. A particle layer 601 in which first particle P1 111 and second particle P2 112, which are battery materials, are disposed in a pattern is formed on the surface of the adhesive layer 102 opposite to the one surface. That is, the particle layer comprises at least one selected from the group consisting of a solid electrolyte, an active material and a current collector material.

On the other surface of the adhesive layer 102, a second substrate 101 is disposed in a region where the particle layer is not formed. The second substrate 101 is arranged to support the periphery of the region where the particle layer is formed in at least two directions.

Here, in the present disclosure, "support the periphery of the region" indicates that a specific component is located adjacent to the region. That is, the second substrate 101 is disposed on the other surface so that it is adjacent to the region where the particle layer is formed. The second substrate 101 may or may not be in contact with the outer edge of the region where the particle layer is formed.

For example, when the particle layer is formed in a rectangular shape on the other surface, the second substrate 101 is arranged to support at least two sides of the region where the particle layer is formed. In addition, when the particle layer is formed in a circular shape, it may be arranged to surround the entire circumference of the outline of the region where the particle layer is formed.

The battery substrate can be used as a secondary battery component by laminating it with a battery material. The first substrate 103 is fixed onto one surface of the adhesive layer 102, but when the secondary battery component is produced, the first substrate 103 is separated in a lamination process to be described below. Therefore, it is preferable that the surface of the first substrate 103 be coated with a release agent so that the first substrate can be separated without reducing an attachment force on one surface of the adhesive layer 102.

On the other hand, the first particle P1, the second particle P2 and the second substrate 101 are fixed onto the other surface of the adhesive layer 102 with an attachment force of the adhesive layer 102. Here, an example of the adhesive layer 102 is a double-sided tape pressure-sensitive adhesive, and an example of the first substrate 103 is a double-sided tape release liner.

In addition, an adhesive layer can be formed by applying an adhesive to the surface of the first substrate.

The adhesive layer 102 is removed by a heat treatment in a secondary battery component producing process. The adhesive layer 102 is preferably thin so that the arrangement of the battery material particles is not lost during heat treatment, and the battery materials do not deteriorate due to heating. When the adhesive layer 102 is thin, it is possible to reduce the amount of deformation before and after heat of the adhesive layer 102 is removed. In addition, it is possible to reduce the degree of heat treatment (for example, the temperature and time) required for removing the adhesive layer 102. Specifically, the thickness of the adhesive layer 102 is preferably 1 to 10 µm, and more preferably 3 to 7 µm.

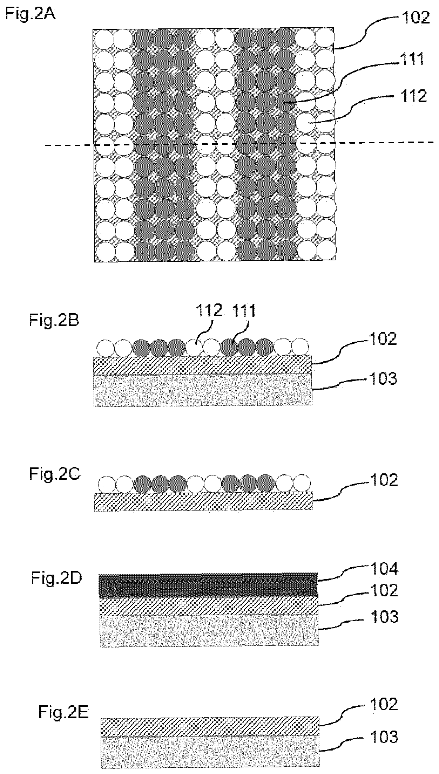

FIGS. 2A to 2E are diagrams showing a configuration of a battery substrate of a conventional example, FIG. 2A is a schematic diagram showing the top surface of the battery substrate, FIG. 2B is a schematic diagram showing a cross section of the center (part indicated by the dotted line in FIG. 2A) of the battery substrate, and FIG. 2C is a schematic diagram showing the state after the first substrate is separated from the battery substrate. An example of the effect of the battery substrate of the present disclosure will be described with reference to FIGS. 1A to 1H and FIGS. 2A to 2E.

The battery substrate shown in FIGS. 2A and 2B has the first substrate 103 and the adhesive layer 102 on the first substrate 103, and battery material particles are arranged on the surface of the adhesive layer 102.

When the battery substrate is used as a secondary battery component, in a lamination process during the production process, the first substrate 103 is separated from the battery substrate in FIG. 2B, resulting in the state of FIG. 2C. During separation, the adhesive layer 102 may extend by being pulled in a planar direction. In addition, in the state of FIG. 2C after separation, the adhesive layer 102 becomes easily deformable and the lower surface sides of the adhesive layer 102 may adhere to each other.

In addition, when the battery substrate of the conventional example shown in FIG. 2B is obtained, a cover film may be provided on the adhesive layer 102 in order to protect the adhesion surface.

FIG. 2D shows the state in which a separable cover film 104 is arranged on the adhesive layer 102 arranged on the first substrate 103. FIG. 2E shows the state in which the cover film 104 in FIG. 2D is separated, and the adhesive layer 102 is exposed. A battery substrate shown in FIG. 2B can be obtained by arranging battery material particles on the exposed adhesive layer 102.

However, when the cover film or the first substrate 103 is separated, the adhesive layer 102 may extend by being pulled in the planar direction.

As described above, in the conventional configuration, the particle pattern may become disordered during the secondary battery producing process due to extension and adhesion of the adhesive layer 102. Particularly, as the area of the battery substrate is larger, this risk is higher, which makes it difficult to increase the area of the secondary battery.

On the other hand, in the battery substrate of the present disclosure shown in FIGS. 1A to 1H, the periphery of the particle layer 601 in which battery material particles are arranged is surrounded by the second substrate 101 in at least two directions, and the second substrate 101 is adhered to and arranged on the adhesive layer 102 so that it supports the particle layer. As a result, the rigidity of the entire battery substrate increases, and extension and deformation of the adhesive layer are curbed.

Thereby, even after the first substrate is separated from the battery substrate as shown in FIG. 1C, the battery material particle pattern is retained, and the secondary battery can be produced while retaining the battery material pattern even in a large area. In addition, when a component having less extensibility than the adhesive layer is used as the second substrate 101, it is possible to further improve the effect of curbing extension and deformation of the adhesive layer.

In the cross-sectional view of the configuration of the battery substrate shown in FIG. 1B, cross-sectional views of a more detailed configuration of the adhesive layer are shown in FIGS. 1C and 1D. The configuration of the adhesive layer 102 and a method of fixing it to the second substrate 101 will be described in detail with reference to these drawings.

As shown in FIGS. 1C and 1D, the adhesive layer 102 may comprise one adhesive layer 102a having one surface, the other adhesive layer 102c having the other surface, and a third substrate 102b positioned between the one layer and the other layer. In the drawing, the adhesion surface on the side on which battery material particles are arranged denoted by reference numeral 102a is the other surface, and 102c denotes the one surface which is the adhesion surface on the side where it is adhered to the first substrate 103. The third substrate is, for example, a thin resin sheet layer that serves as the core of the adhesive layer.

In the configuration shown in FIG. 1C, the adhesive layers 102a and 102c are formed on both surfaces of the resin sheet 102b, which is the third substrate, and the battery material particles and the second substrate are fixed using the attachment force on the surface of the adhesive layer 102a. That is, the other layer is located between the second substrate and the third substrate, and the particle layer and the second substrate are both adhered to the other surface.

In the configuration shown in FIG. 1D, the adhesive layer 102a is formed on a part of the surface on the side of the resin sheet 102b, which is the third substrate, on which the battery material particles are arranged. On the adhesive layer 102a, the battery material particles are fixed using the attachment force on the surface of the adhesive layer 102a. The second substrate 101 is directly fixed to a region where the adhesive layer 102a is not formed so that it comes into contact with the third substrate without the adhesive layer therebetween. That is, the second substrate is arranged in a region of the adhesive layer where the other layer is not located so that it comes into contact with the third substrate. The particle layer is adhered to the other surface, and the second substrate is adhered to the third substrate.

The method of directly fixing the second substrate to the third substrate is, for example, thermocompression, and other methods may be used for fixing.

In the configuration shown in FIG. 1E, the second substrate 101 and the resin sheet 102b, which is the third substrate, are in contact with each other without the adhesive layer 102a therebetween. The adhesive layer 102a only needs to be formed in a region on the third substrate where the battery material particles are arranged and does not need to be formed between the third substrate 102b and the second substrate 101.

The adhesive layer that is divided may be formed on the first substrate 103. In the configuration shown in FIG. 1F, the adhesive layer 102 is divided into 102d that is adhered to the particle layer and 102e that is adhered to the first substrate 103 and the second substrate 101. A slit 105 is located between 102d and 102e. In the configuration shown in FIG. 1F, the adhesive layer 102 is divided by the slit 105 into 102d and 102e.

The slit 105 is preferably formed to surround the outer circumference of the region where the particle layer of the battery substrate is formed (particle-arranged region). The battery substrate preferably has a slit formed to surround the outer circumference of the particle-arranged region.

The slit 105 may be a half-cut including a perforation, a complete cut, or a combination thereof. In the case of a complete cut, the first substrate 103 holds the adhesive layer 102d in contact with the particle layer and 102e in contact with the first substrate 103 and the second substrate 101. The slit 105 may penetrate into the first substrate 103 to an extent that the first substrate 103 is not cut. The length of the slit 105 (the depth from the surface of the adhesive layer 102) is preferably equal to or larger than the thickness of the adhesive layer 102, and is preferably smaller than the total thickness of the adhesive layer 102 and the first substrate 103.

In the configuration shown in FIG. 1G, a slit is additionally formed from the side of the first substrate, and the ends of the first substrate and the adhesive layer are divided into 103b and 102f. The configuration of FIG. 1G is a configuration in which the end 102e of the adhesive layer divided from the adhesive layer 102 and the end 103 of the first substrate in contact with the end 102e of the adhesive layer are additionally divided by the slit 105. 102f indicates the end of the adhesive layer divided from 102e by the slit 105. 103b indicates the end of the first substrate divided from the first substrate 103 by the slit 105. The second substrate 101 holds both the end 102f of the adhesive layer and the end 103b of the first substrate.

The configuration of FIG. 1H shows the state in which the end 103b of the first substrate and the end 102f of the adhesive layer have been removed from the configuration of FIG. 1G. When the end 103b of the first substrate and the end 102f of the adhesive layer are removed, it is possible to form a configuration in which the adhesive layer is not exposed on the outer circumference of the battery substrate. Therefore, for example, it is possible to prevent adhering to the peripheral members when the battery substrate is fixed and the battery substrates from adhering to each other when the battery substrates are stored in a stacking manner.

In FIG. 1H, both the end 103b of the first substrate and the end 102f of the adhesive layer have been removed, but the end 102f of the adhesive layer may remain, and only the end 103b of the first substrate may be separated.

When only the end 103b of the first substrate is separated, the adhesive force of the exposed adhesive layer makes it easier for the battery substrates to be fixed to each other when the battery substrates are laminated.

The adhesive layer in FIGS. 1F to 1H is schematically shown in a one-layer configuration shown in FIG. 1B, but as shown in FIGS. 1D and 1E, a configuration in which the adhesive layers 102a and 102c are formed on both surfaces of the resin sheet 102b may be used.

In all of the configurations shown above, the battery material particles are adhered to and arranged on the adhesive layer 102 so that they are supported by the second substrate 101 in at least two directions, the adhesive layer 102 is fixed to the second substrate 101, and thus the rigidity of the entire battery substrate increases. Therefore, any of the configurations may be used. In addition, respective structures may be used in combination.

Hereinafter, the configuration of the battery substrate will be described in detail with reference to FIG. 1C and FIG. 1B which shows a simplified configuration of the adhesive layer in FIG. 1C.

### First Substrate

The first substrate 103 comprises a resin. Examples of resins include polyethylene terephthalate (PET), kapton, an acrylic resin (PMMA), and polycarbonate. The first substrate is preferably a resin layer.

As described above, as the first substrate and the adhesive layer, a resin-based double-sided tape having a pressure-sensitive adhesive and a release liner can be used. When a double-sided tape is used, the release liner corresponds to the first substrate, and the pressure-sensitive adhesive corresponds to the adhesive layer.

The first substrate has a film-like shape. The thickness of the first substrate is not particularly limited, and is preferably 10 to 200 µm, and more preferably 20 to 100 µm.

### Second Substrate

As the material of the second substrate 101, for example, resin materials such as polyethylene terephthalate (PET), kapton, acrylic resins (PMMA), and polycarbonate, and metal materials such as iron, copper, and aluminum are preferably used. That is, the second substrate preferably comprises a resin material or a metal material.

The thickness of the second substrate is preferably 10 µm or more, more preferably 15 µm or more, and still more preferably 20 µm or more. When the thickness of the second substrate is 10 µm or more, the rigidity of the entire battery substrate can increase, and extension and deformation of the adhesive layer can be further curbed.

It is preferable that the second substrate does not extend in the in-plane direction relative to the adhesive layer described below. That is, it is preferable that extension of the second substrate in the planar direction be less than extension of the adhesive layer in the planar direction.

The degree of extension of each material in the planar direction can be evaluated, for example, by measuring the elongation in a tensile test.

In addition, it is desirable to select a combination of the material and the thickness so that the battery substrate is bent 30° or more when it is integrated with the adhesive layer. Preferable combinations will be described below.

### Adhesive Layer

As the material of the adhesive layer 102, a material that can be removed by heating is selected. As shown in FIGS. 1C and 1D, it is preferable to form a configuration in which an adhesion surface is provided on both surfaces of the resin sheet, which is the third substrate.

For the resin sheet 102b, resin materials such as polyethylene terephthalate (PET), polypropylene (PP), polyvinyl alcohol (PVA), and polyethylene (PE) can be used. For the adhesive layers 102a and 102c, it is desirable to use an acrylic-based pressure-sensitive adhesive, a rubber-based pressure-sensitive adhesive, a silicone-based pressure-sensitive adhesive or the like.

It is preferable that the pressure-sensitive adhesive be applied to both surfaces of the resin sheet 102b to form an adhesive layer. In addition, as described above, the pressure-sensitive adhesive of a resin-based double-sided tape having a pressure-sensitive adhesive and a release liner can be used as the adhesive layer.

It is preferable that the adhesive layer and the first substrate be bent 30° or more when the particle layer and the second substrate are integrated together. That is, it is preferable that the battery substrate be bendable and a bending angle when bent is 30° or more.

The bending angle is more preferably 35° or more and still more preferably 40° or more.

For example, when a PET film with a thickness of 20 µm or more is used as the second substrate and a pressure-sensitive adhesive applied to a thickness of less than 10 µm is used as the adhesive layer, it is possible to form a configuration in which the second substrate is less likely to extend in the planar direction than the adhesive layer, and can be bent 30° or more when integrated with the adhesive layer.

By satisfying the above conditions, it is possible to retain the shape of the particle layer in the secondary battery producing process and curb disorder of the particle pattern.

### Battery Material Particle

As the first particle P1 and the second particle P2, which are battery material particles, at least one selected from the group consisting of a solid electrolyte, an active material and a current collector material is used. The first particle P1 and the second particle P2 may be the same particles or different particles.

As the solid electrolyte, for example, lithium lanthanum zirconate Li₇La₃Zr₂O₁₂ (LLZ) which is a garnet type solid electrolyte, lithium aluminum germanium phosphate Li_{1.5}Al_{0.5}Ge_{1.5}(PO₄)₃ (LAGP), which is a NASICON type solid electrolyte, lithium aluminum titanium phosphate Li_{1.4}Al_{0.4}Ti_{1.6}(PO₄)₃ (LATP), which is a perovskite type solid electrolyte, Li₃BO₃ (LBO), Li_{5.9}Yb_{0.81}La_{0.09}Zr_{0.1}(BO₃)₃, which is a boron-based solid electrolyte, and products in which some of these elements are substituted can be used. In addition, products obtained by treating the above materials with a planetary ball mill can be used.

The above solid electrolytes may be used alone or a plurality thereof may be used in combination. The solid electrolyte preferably comprises at least one selected from the group consisting of LLZ, LAGP, LATP, LBO, Li_{5.9}Yb_{0.81}La_{0.09}Zr_{0.1}(BO₃)₃ and products obtained by treating these materials with a planetary ball mill.

As the active material, lithium cobalt oxide LiCoO₃ (LCO) and a ternary positive electrode material (NMC), which are layered rock salt type active materials, and the like can be used. In addition, lithium iron phosphate LiFePO₄ (LFP), lithium vanadium phosphate Li₃V₂(PO₄)₃ (LVP), and lithium cobalt phosphate LiCoPO₄ (LCP), which are olivine type active materials, and the like can be used. In addition, graphite, Si, and lithium titanate Li₄Ti₅O₁₂ (LTO) may be used.

The above active materials may be used alone or a plurality thereof may be used in combination. The active material preferably comprises at least one selected from the group consisting of LCO, LFP, LVP, LCP, a ternary positive electrode material, graphite, Si and LTO.

The current collector material is not particularly limited, and graphite such as natural graphite and artificial graphite, carbon black such as acetylene black, ketjen black, channel black, furnace black, lamp black, and thermal black, conductive fibers such as fluorinated carbon powder, carbon fibers, carbon nanotubes, and metal fibers, metal powder such as gold, platinum, silver, and aluminum, conductive whiskers such as zinc oxide, conductive metal oxides such as titanium oxide, and organic conductive materials such as a phenylene dielectric can be used.

In addition, as materials that improve pattern retention of a solid electrolyte, an active material, and a current collector material, resin particles may be used as a binder. That is, the particle layer may comprise resin particles.

Examples of resin particles include resin materials such as polyethylene terephthalate (PET), polypropylene (PP), polyvinyl alcohol (PVA), polyethylene (PE), and acrylic.

The above materials that have been subjected to modification treatments such as various surface treatments, classification treatments, and planetary ball mill treatments in advance may be used.

FIGS. 1A to 1H and the following description show an example in which two types of battery material particles, the first particle P1 and the second particle P2, are used, but the battery material particles may be of one type or three or more types. That is, a plurality of the above solid electrolytes, active materials and current collector materials can each be used in combination. In addition, the particle layer may also be composed of the same type of particles.

The area ratio of the region where the battery material particles are arranged in the region on the adhesive layer where the particle layer is disposed is preferably 80 area% or more. That is, it is preferable to arrange battery material particles that are at least one selected from the group consisting of a solid electrolyte, an active material and a current collector material in 80 area% or more of the area of the region where the particle layer is disposed.

Satisfying the above conditions indicates that the battery material particles are densely arranged in the region where the particle layer is disposed. When the area ratio is 80 area% or more, the battery output of the secondary battery can be kept at a favorable level.

The method of measuring the area of the region where the particle layer is disposed and the region where the battery material particles are arranged will be described below.

In the battery substrate producing process and the process of producing a secondary battery using a battery substrate, wrinkles or folds may occur on the adhesive layer and the particle layer arranged on the adhesive layer. When the battery substrate of the present disclosure has a particle layer and a second substrate arranged around the particle layer with an adhesive layer therebetween, the second substrate structurally reduces extension and deformation of the adhesive layer, and it is possible to reduce the occurrence of the above wrinkles and folds.

For the battery substrate, it is preferable that the wrinkles do not occur in 90.0 area% or more of the region within the area of the region on the adhesive layer where the particle layer is formed. That is, the ratio of the area of the continuous region without wrinkles on the surface to the area of the region where the particle layer is formed is preferably 90.0 area% or more. The proportion of the area of the continuous region without wrinkles on the surface is more preferably 95.0 area% or more. The area of the region can be calculated by a method to be described below.

On the other surface of the adhesive layer, there may be a plurality of particle-arranged regions. That is, the particle layer may be formed at a plurality of locations on the other surface of the adhesive layer. In such a case, the area of the region where the particle layer is formed at the above area ratio is the sum of the areas of a plurality of particle layers formed.

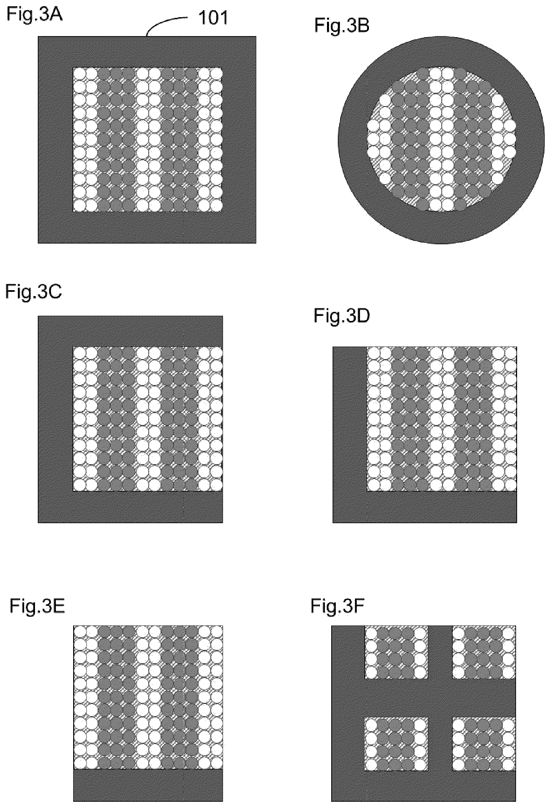

FIGS. 3A to 3D and 3F are diagrams showing the configuration of the battery substrate of the present disclosure, and are diagrams showing the state of the second substrate and the particle layer arranged on the other surface of the adhesive layer as viewed from above. The shape of the second substrate 101 will be described with reference to these drawings.

In the configuration shown in FIG. 3A, the second substrate 101 is arranged to completely surround the entire circumference of the particle layer formed in a rectangular shape. In FIG. 3B, the second substrate 101 is arranged to surround the entire circumference of the particle layer formed in a circular shape.

In the configuration shown in FIG. 3A, the second substrate 101 is arranged to support the periphery of the region where the particle layer is formed in four directions. In addition, in the configuration shown in FIG. 3B, the second substrate 101 is arranged to support the entire circumference of the region where the particle layer is formed, and the periphery in four directions: up, down, left and right in the drawing, is supported by the second substrate 101. Therefore, in the configurations shown in FIGS. 3A and 3B, it is possible to retain the shape of the particle layer and curb disorder of the particle pattern.

The shape of the second substrate 101 may be any substrate shape that surrounds the entire circumference of the particle layer regardless of the outer shape or the hole shape. In FIGS. 3A and 3B, the second substrate 101 has a hole large enough to completely surround the entire circumference of the particle layer. That is, the part of the second substrate 101 that overlaps the region on the adhesive layer where the particles are arranged is cut in advance.

The second substrate 101 has a window-like shape as shown in FIGS. 3A and 3B or a notch-like shape as shown in FIGS. 3C and 3D, and it is preferable that this shape support the periphery of the region where the particle layer is formed in at least two directions.

FIGS. 3C and 3D show, as the shape of the second substrate 101, the shapes that support the particle layer in three directions and two directions. As in FIGS. 3C and 3D, when the circumference of the particle layer is supported in two or more directions, the shape of the particle layer can be retained, and the performance of curbing disorder of the particle pattern is improved, and thus this shape may be used.

On the other hand, a shape that performs support only in one direction as shown in FIG. 3E does not have the configuration of the present disclosure, and shape retention performance of the particle layer is almost the same as when the second substrate 101 is not present. Therefore, in the secondary battery producing process, wrinkles and the like are likely to occur due to extension and adhesion of the adhesive layer 102, and the particle pattern is likely to become disordered.

In FIG. 3F, a plurality of particle-arranged regions (particle layer) are present on the other surface of the adhesive layer, and the second substrate 101 is arranged to surround the entire circumference of the particle layer. The configuration shown in FIG. 3F is a combination of the configurations shown in FIGS. 3A to 3D, and since the shape of the particle layer can be retained, it can be used as the shape of the second substrate 101.

Although FIGS. 3A, 3C, 3D and 3F have been described using a linear shape as the shape of the second substrate 101, the outer circumferential shape of the second substrate 101 and the shape surrounding the particle layer may be a curved shape or a combination of a linear shape and a curved shape.

### Method of Producing Battery Substrate

A method of producing a battery substrate according to a second embodiment of the present disclosure will be described.

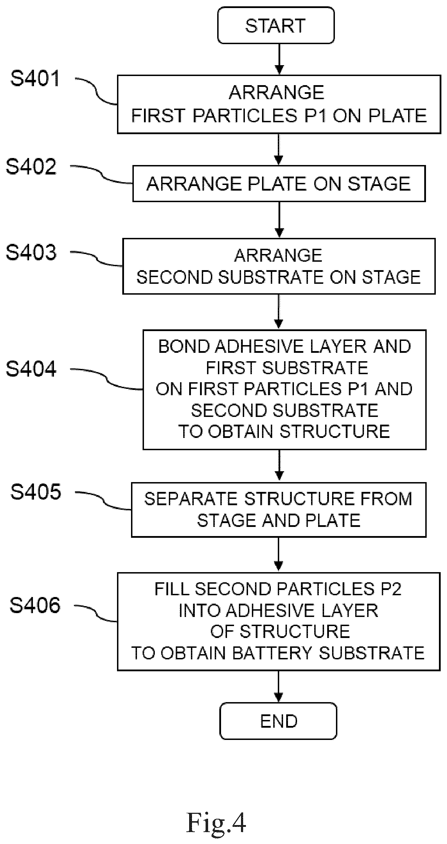

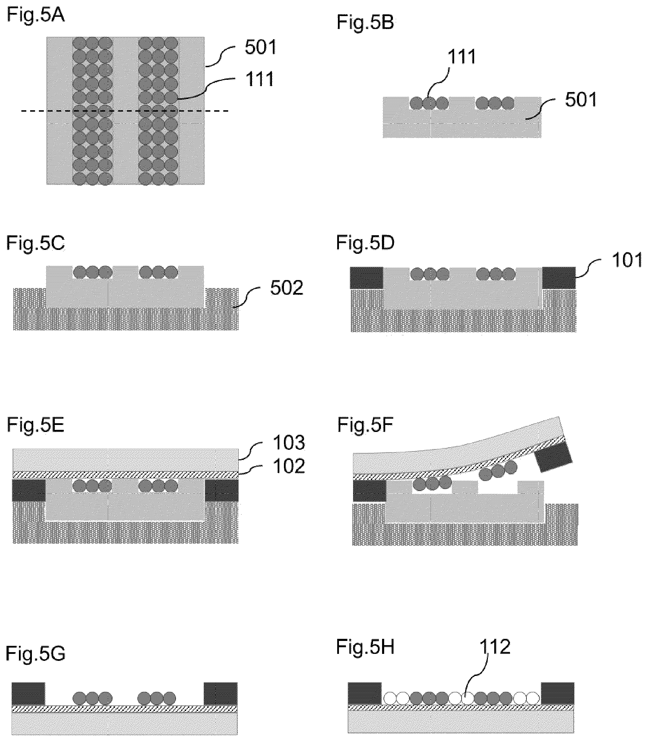

FIG. 4 is a diagram showing a flow of producing the battery substrate of the present disclosure using the adhesive layer having the configuration shown in FIGS. 1B, 1D and 1E described above. In the drawing, reference numerals S401 to S406 denote battery substrate producing steps. FIGS. 5A to 5H are diagrams illustrating the battery substrate producing process shown in FIG. 4. In the drawing, reference numeral 501 denotes a plate that defines the arrangement positions of the first particle P1, and reference numeral 502 denotes a stage as a mounting part that defines the positions of the plate 501 and the second substrate 101. Hereinafter, battery substrate producing processes shown in FIGS. 1A and 1B will be described in detail with reference to FIG. 4 and FIGS. 5A to 5H.

Steps S401 and S402 are processes of arranging the first particle P1 on a plate-like member. The plate-like member is, for example, a plate 501 or plate 501 fixed to a stage 502.

In Step S401, the first particle P1 is filled on the plate. On the top surface of the plate, a pattern of depressed portions with a depth sufficient to hold the first particle P1 is formed. The material and size of the plate are not particularly limited. For example, a glass engraved plate produced by patterning glass with a photoresist and dry etching it can be used as the plate.

The first particle P1 is a solid electrolyte, an active material or a current collector material. The particle diameter of the first particle P1 is not particularly limited, and is preferably appropriately selected depending on the depth of the depressed portion provided on the top surface of the plate 501. As a guideline, the median diameter of the first particle P1 is preferably equal to or larger than the depth of the depressed portion of the plate.

FIG. 5A shows a schematic diagram of the top surface when the first particle P1 is filled on the plate, and FIG. 5B shows a schematic diagram of a cross section of the center (part indicated by the dotted line in FIG. 5A). The method of filling and arranging the first particle P1 in the plate 501 is not particularly limited, and examples thereof include a method in which the first particle P1 is supported on magnetic particles, brush fibers, elastic materials or the like, and filled and arranged in the depressed portion of the plate 501.

For example, when the first particle P1 is supported and arranged on magnetic particles, the first particle P1 can be arranged in the depressed portion of the plate 501 according to the following processes (1) and (2).
(1) The magnetic particles and the first particles P1 are stirred and mixed to obtain fillers in which the first particles P1 are supported on the surface of the magnetic particles.
(2) The fillers are rubbed against the plate 501 to selectively arrange only the first particles P1 in the depressed portion of the plate 501.

When particles having a particle diameter smaller than the opening diameter of the depressed portion of the plate 501 are used as the first particle P1, and particles having a particle diameter larger than the opening diameter of the depressed portion are used as the magnetic particles, it is possible to selectively bring only the first particle P1 into contact with the bottom surface (bottom) or side parts of the depressed portion. The first particle P1 that come into contact with the depressed portion due to rubbing is strongly restrained with a physical restraining force, an electrostatic attachment force or the like according to the structure of the depressed portion and are detached from the magnetic particles. As a result, it is possible to selectively arrange only the first particle P1 in the depressed portion of the plate 501.

In Step S402, the plate 501 on which the first particle P1 is arranged is placed on the stage 502. FIG. 5C shows the state in which the plate 501 is placed on the stage 502.

The stage 502 has a plate-like shape, and has a depressed portion for fixing the plate 501 on its top surface. It is preferable that the depth of the depressed portion of the stage 502 be shallower than the thickness of the plate 501. That is, when the plate 501 is placed on the stage 502, it is preferable that the top surface of the plate 501 be located at a position higher than the top surface of the stage 502.

The material of the stage 502 is not particularly limited, and it is preferable to use a material that does not easily deform. For example, it is preferable to use a metal plate such as aluminum as the stage.

For example, when a thick plate 501 is fitted into the depressed portion provided on the stage 502, the position of the plate is determined. The method of fixing the plate 501 to the stage 502 is not particularly limited, and other methods such as performing fixing by creating a negative pressure between them using air may be used.

Here, the order in which Steps S401 and S402 are performed is not limited. That is, the first particle P1 may be arranged on the plate 501 that is fixed to the stage 502 in advance. According to Steps S401 and S402, the first particle P1 is arranged on a plate-like member.

In Step S403, the second substrate 101 is arranged on a part of the stage 502 to which the plate 501 is not fixed. That is, Step S403 is a process of arranging the second substrate 101 in a region of the plate-like member where the first particle P1 is not arranged.

FIG. 5D shows the state after the second substrate 101 is placed on the stage 502.

The second substrate 101 is placed so that the height of the surface matches the height from the top surface of the stage 502 to the top surface of the plate 501. That is, the second substrate 101 is placed so that the surface of the second substrate 101 that is not in contact with the stage 502 and the top surface of the plate 501 are positioned at the same height. Since the second substrate 101 is separated from the stage in a subsequent process, it does not necessarily have to be fixed onto the stage 502 or they may be fixed together.

In Step S404, the first substrate 103 and the adhesive layer 102 to which one surface of the first substrate is adhered are placed on and bonded to the plate 501 on which the first particle P1 is arranged and the second substrate 101.

That is, Step S404 is a process in which the surface (the other surface) of the adhesive layer that is not adhered to the first substrate is bonded so that it comes into contact with the first particle P1 arranged on the plate-like member to obtain a structure in which the first particle P1, the second substrate, the adhesive layer and the first substrate are integrated together. FIG. 5E shows the state in which the adhesive layer 102 and the first substrate 103 are bonded to the plate 501 on which the first particle P1 is arranged and the second substrate 101.

The method of bonding the other surface of the adhesive layer to the first particle P1 and the second substrate is not particularly limited. For example, it is preferable that the integrated adhesive layer 102 and first substrate 103 be placed on the plate 501 holding the first particle P1 and the second substrate 101, and then be bonded by applying pressure from above with a roller or the like.

Step S405 is a separation process in which the above structure is separated from the plate 501 and the stage 502.

FIG. 5F shows the state in which the structure is separated from the plate 501 and the stage 502. In addition, FIG. 5G shows a cross-sectional view of the structure after separation in which the first particle P1 is arranged. The particles arranged on the plate 501 are transferred and fixed onto the adhesive layer 102 without changing their arrangement.

The separation process may include a process of bending the structure in which the first particle P1, the second substrate, the adhesive layer and the first substrate are integrated together.

In Step S406, the second particle P2 is arranged in the region on the adhesive layer 102 where the first particle P1 is not filled. The second particle P2 is a solid electrolyte, an active material or a current collector material. As described above, the first particle P1 and the second particle P2 may be the same particles. That is, the first particle P1 and the second particle P2 may both be an active material, a solid electrolyte or a current collector material.

FIG. 5H is a cross-sectional view of the battery substrate on which the second particle P2 is arranged. In this state, a desired battery material pattern is formed on the adhesive layer 102, and a battery substrate is obtained.

The method of arranging the second particle P2 on the adhesive layer is not particularly limited. For example, the second particle P2 can be arranged by a method in which the second particle P2 is supported on magnetic particles, brush fibers, elastic materials or the like, and filled in a region on the adhesive layer 102 where the first particle P1 is not arranged. For example, the second particle P2 can be arranged by the same method as the method using the magnetic particles described above.

In addition, by the same method, third particle P3 may be additionally arranged on the adhesive layer 102. The third particle P3 is, for example, resin particle.

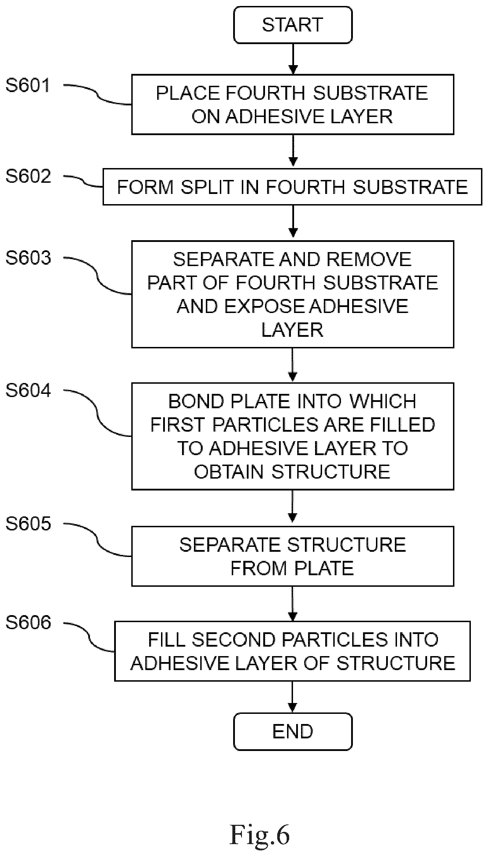

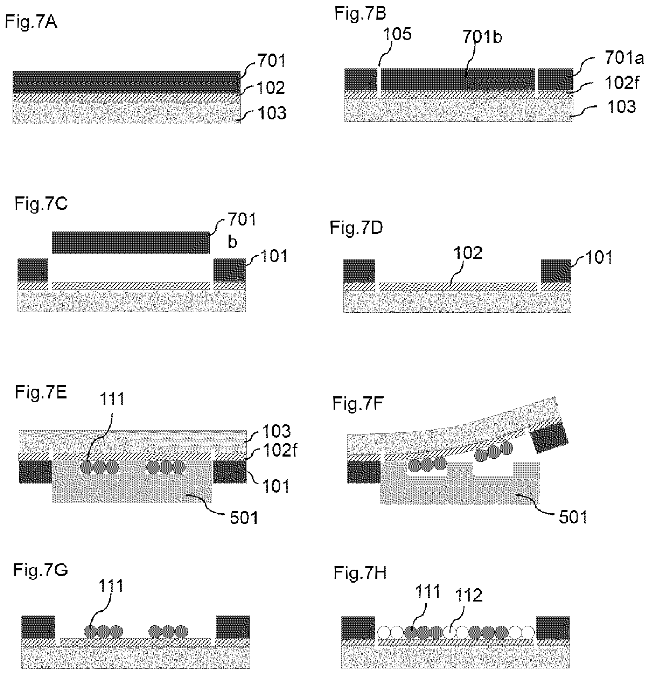

FIG. 6 is a diagram showing a flow of producing the battery substrate of the present disclosure using a configuration in which slits are provided in the adhesive layer as shown in FIGS. 1F and 1G. In the drawing, reference numerals S601 to S606 denote battery substrate producing steps. FIGS. 7A to 7H are diagrams illustrating the battery substrate producing process shown in FIG. 6, and the process will be described with reference to these drawings.

Step S601 is a process of placing a fourth substrate 701 on the adhesive layer 102 provided on the first substrate 103. The state after Step S601 is shown in FIG. 7A. In the case, the fourth substrate 701 also serves as a cover film. The fourth substrate is not particularly limited, and for example, the same material as the second substrate described above can be used. The fourth substrate preferably comprises PET.

Since the integrated first substrate 103 and adhesive layer 102 is less dependent on the particle arrangement pattern or the type of the particle material, and can be used as a common material, it is often more efficient to prepare them together on a separate line in advance. Therefore, in order to protect the adhesion surface from contamination and foreign substance adhesion during storage, it is advantageous to provide a cover film that protects the adhesive layer 102.

General industrial tapes are often distributed with a cover film attached. Therefore, an industrial tape with a cover film attached can be used as a configuration in which the first substrate, the adhesive layer and the fourth substrate are integrated together.

Step S602 is a process of forming the slit 105 in the fourth substrate 701. The state after Step S602 is shown in FIG. 7B. According to Step S602, the fourth substrate 701 is divided into a center 701b and an end 701a.

The method of forming slits is not particularly limited, and for example, the slit can be formed using a cutting die using a physical cutter or a laser processing machine. In particular, laser processing is a suitable method because, even if the shape or the thickness of the cover film is changed, it can be adjusted by changing the settings. The slit is preferably formed by laser processing. Particularly, it is more preferable to use a laser with a high thermal processing ratio such as a carbon dioxide laser because the processed end is heated.

The fourth substrate 701 may be completely divided by the slit 105 or may be half-cut. In addition, even in the half-cut, cut parts such as perforations and non-cut parts may be repeatedly continuously formed. It is important to form the slit such that the fourth substrate can be divided along the slit line.

The length of the slit 105 (the depth from the surface of the fourth substrate) is preferably equal to or larger than the thickness of the fourth substrate 701 and preferably equal to or smaller than the total thickness of the fourth substrate 701 and the adhesive layer 102. The depth of the slit may reach the first substrate 103, but it is important that the first substrate 103 not be cut.

As shown in FIG. 7B, in Step S602, slits may also be made in the adhesive layer 102. In this case, the adhesive layer 102 may be completely divided by the slit or may be half-cut. In FIG. 7B, 102f denotes the end of the adhesive layer divided by the slit.

As described above, a thinner thickness of the adhesive layer 102 is preferable, but when the adhesive layer 102 is thin, half-cut conditions tend to be more delicate. In order to stably form the slit, when the adhesive layer 102 is thin, the slit 105 is preferably formed in a perforation pattern.

Step S603 is a process in which a part 701b of the fourth substrate divided by the slit is separated and removed along the slit, and the adhesive layer is exposed. FIG. 7C shows the state when Step S603 is performed.

The fourth substrate 701a that is not separated but remains at the end of the battery substrate becomes the second substrate 101. The surface of the adhesive layer 102 exposed by separating the part 701b of the fourth substrate becomes a particle-adhered area. FIG. 7D shows the state in which the particle-adhered area is exposed.

The method of producing a battery substrate may include a process of forming an adhesive layer on a first substrate, a process of adhering a fourth substrate onto the adhesive layer, and a process of separating and removing a center region of the fourth substrate and exposing the surface of the adhesive layer. It is preferable that the center region of the fourth substrate be separated and removed by forming slits along the outer circumference of the region.

That is, the production method shown in FIG. 6 and FIGS. 7A to 7D is a method in which the second substrate 101 is formed on the adhesive layer 102 before pressing it against the plate 501. In this example, the method of processing the fourth substrate 701 on the adhesive layer 102 to form the second substrate 101 has been described, but the same state as in the configuration as in FIG. 7D can be obtained by separately producing the second substrate 101 and arranging it at the end on the adhesive layer 102.

The method of producing a battery substrate may include a process of arranging the second substrate 101 as a frame material on the adhesive layer 102 in advance. The method of producing a battery substrate preferably includes a process of arranging the second substrate 101 on the other surface of the adhesive layer 102 (the surface opposite to the surface that is adhered to the first substrate).

The second substrate 101 is preferably arranged to support at least two sides of the region on the adhesive layer where the particle layer is formed. When the particle layer is formed in a circular shape, it may be arranged to surround the entire circumference of the outline of the region where the particle layer is formed. The second substrate 101 is preferably arranged on the adhesive layer to surround the outer circumference of the region where the particle layer is formed.

When the second substrate 101 is arranged in advance, the region where the second substrate 101 is not arranged becomes a particle-arranged region. That is, the method of producing a battery substrate may include a process of arranging a frame material on an adhesive layer and a process of arranging particles in a region on the adhesive layer where the frame material is not arranged.

Step S604 is a process in which the plate 501 into which the first particle P1 111 is filled in advance is attached to the surface of the adhesive layer exposed by separating the part 701b of the fourth substrate. The state after Step S604 is shown in FIG. 7E.

Step S604 is a process in which the adhesive layer 102 exposed in Step S603 is bonded so that it comes into contact with the first particle P1 111 arranged on the plate 501, which is a plate-like member, to obtain a structure in which the first particle P1 111, the adhesive layer 102, the first substrate 103 and the second substrate 101 are integrated together.

The method of producing a battery substrate preferably has a process in which the region on the other surface of the adhesive layer where the second substrate is not arranged is bonded so that it comes into contact with at least the first particle P1 to obtain a structure in which the first particle P1, the second substrate, the adhesive layer and the first substrate are integrated together.

According to Step S604, a structure similar to a configuration in which the stage 502 is removed from the structure (FIG. 5E) obtained in Step S404 can be obtained.

The method of filling the first particle P1 into the plate and the method of pressing the plate are not particularly limited, and for example, the same method as in the above Step S404 is used.

Step S605 is a process in which the above structure is separated from the plate 501, and the first particle P1 filled on the plate 501 is transferred to the surface of the adhesive layer. FIG. 7F shows the state in which Step S605 is performed.

Step S605 is a separation process in which the above structure is separated from the plate 501 as in the above Step S405. The separation process may include a process of bending the structure in which the first particle P1, the second substrate, the adhesive layer and the first substrate are integrated together.

In the aspect shown in FIGS. 7B to 7E, the slit 105 is formed in advance in the adhesive layer along the inner circumference (the outer circumference of the particle-arranged region) of the second substrate 101. Therefore, when a particle material with a strong fixing force to the plate 501 is used as the first particle P1, the first particle P1 and the adhesive layer 102 may be detached from the structure when the structure is separated, and remain on the side of the plate. When a material with a strong fixing force to the plate is used, it is advantageous to form slits using half-cut or perforation and not to completely divide the adhesive layer. When the adhesive layer is not completely divided, it is possible to curb detachment of the first particle P1 and the adhesive layer from the structure in the separation process and transfer them onto the first substrate while the particle arrangement pattern is retained. FIG. 7G shows the state after Step S605 is completed.

In Step S606, the second particle P2 112 is arranged in a region on the adhesive layer 102 where the first particle P1 111 is not filled to obtain a battery substrate. The state after Step S606 is shown in FIG. 7H. The method of arranging the second particle P2 is not particularly limited, and for example, the same method as in the above Step S406 is used.

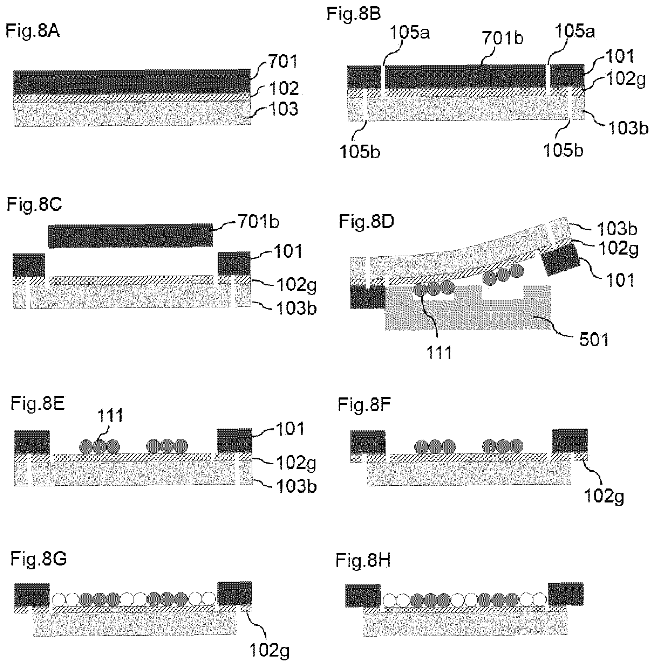

In addition, in the battery substrate producing process, a slit may be formed on the side of the first substrate 103. FIGS. 8A to 8H are diagrams illustrating a battery substrate producing process in which slits are formed in the first substrate 103, and the process will be described with reference to these drawings.

FIG. 8A shows the state in which the fourth substrate 701 is placed on the adhesive layer 102 provided on the first substrate 103, which is the same state as in FIG. 7A.

Like FIG. 7B, FIG. 8B shows the state in which slits 105a are formed in the fourth substrate 701 and slits 105b are formed in the first substrate 103.

The slits 105b formed in the first substrate 103 may be formed by selecting complete cut, half-cut or perforation cut. The cut depth of the slit 105b may reach the second substrate 101, but it is important that the second substrate 101 not be cut. The length of the slit 105b (the depth from the surface of the first substrate 103) is preferably equal to or larger than the thickness of the first substrate 103 and preferably equal to or smaller than the total thickness of the first substrate 103 and the adhesive layer 102.

It is preferable that the position of the slit 105b formed in the first substrate 103 be closer to the end side of the battery substrate than the slit 105a formed in the fourth substrate 701 as shown in FIG. 8B. That is, the slit 105b is preferably formed outside the region corresponding to the particle-arranged region. When the slit 105b is formed further outward (on the end side) than the slit 105a, it is possible to prevent the loss of the particle-arranged region.

The method of producing a battery substrate may include a process of forming slits in the first substrate. The slit formed in the first substrate is preferably formed further outward (on the end side) than the particle-arranged region on the adhesive layer.

After the slit 105b is formed, the above Step S603 is performed, and a part 701b of the fourth substrate is separated and removed (FIG. 8C). Next, Steps S604 and S605 are performed (FIG. 8D), and the first particle P1 111 is transferred from the plate 501 onto the surface of the adhesive layer 102 (FIG. 8E).

The function of the slit 105b provided at the end of the first substrate is, for example, as shown in FIG. 8F, to allow only the first substrate 103b at the end to be separated, and the slit can be used to fix the battery substrate when the battery substrates are laminated by utilizing an exposed end 102g of the adhesive layer.

For example, in the state of FIG. 8F in which the end 103b of the first substrate is separated, a process of arranging the second particle P2 can be performed in the region on the adhesive layer where the first particle P1 is not arranged. In addition, the state of FIG. 8G in which the first particle P1 and the second particle P2 are arranged can be used in a transfer lamination process.

In addition, the state of FIG. 8H in which the end 102g of the adhesive layer present at the outer circumferential part of the battery substrate is removed can be used. When the end 102g of the adhesive layer is removed, it is possible to form a configuration in which the adhesive layer is not exposed on the outer circumference of the battery substrate. Therefore, it is possible to prevent problems caused when there is a part with an attachment force on the outer circumference of the battery substrate, for example, adhesion to peripheral members such as contact pins and guides during transportation when positioning is based on the outer circumference, and adhesion of battery substrates to each other when the battery substrates are stored in a stacking manner.

As shown in FIGS. 8F to 8H, it is preferable to perform a process of arranging the second particle P2 after the end 103b of the first substrate is separated, and then remove the end 102g of the adhesive layer. Performing the processes in this order is preferable because the battery substrate can be fixed with the adhesive force of the end 102g of the adhesive layer during the process of arranging the second particle P2 and adhesion to the peripheral members to other battery substrates can be prevented in the subsequent process.

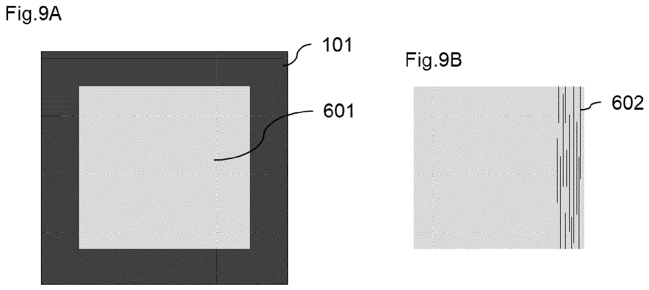

FIG. 9A is a schematic diagram showing an example of the state in which the battery substrate of the present disclosure is observed from above, and reference numeral 601 denotes a particle region (particle layer) in which the first particle P1 and the second particle P2 are arranged in a pattern. Reference numeral 101 denotes the second substrate that supports the particle layer. In the schematic diagrams shown in FIGS. 1A to 1H and FIGS. 5A to 5H, the first particle P1 and the second particle P2 are shown. However, actual particles are so small that the pattern in which the particles are arranged in the produced battery substrate cannot be observed with the naked eye. However, as shown in FIG. 9A, the battery material pattern can be recognized by a color corresponding to the filling area ratio of the first particle P1 and the second particle P2, and a particle region 601 and a region where the second substrate 101 is arranged can be distinguished.

### Method of Producing Secondary Battery Component

The battery substrate can be laminated with other battery materials to form a laminate, and the laminate can be heated and used as a secondary battery component.

As the battery material, the battery substrate can be used. That is, the plurality of battery substrates may be laminated to form a laminate. In addition, the battery material may be a current collector, a solid electrolyte or an electrode. A single battery material may be used or a plurality of battery materials may be used in combination.

That is, the secondary battery component includes the battery substrate or the heated battery substrate, and the battery material. The battery material is at least one selected from the group consisting of a battery substrate, a current collector, a solid electrolyte and an electrode.

The battery substrate, the current collector, the solid electrolyte and/or the electrode can be laminated in any combination. For example, when the particle layer of the battery substrate comprises an active material, a laminate can be formed by laminating a current collector and/or a solid electrolyte as the battery material.

The battery material is not particularly limited, and known materials can be used. For example, a current collector, a solid electrolyte or an electrode produced using the battery substrate may be used or other known materials may be used.

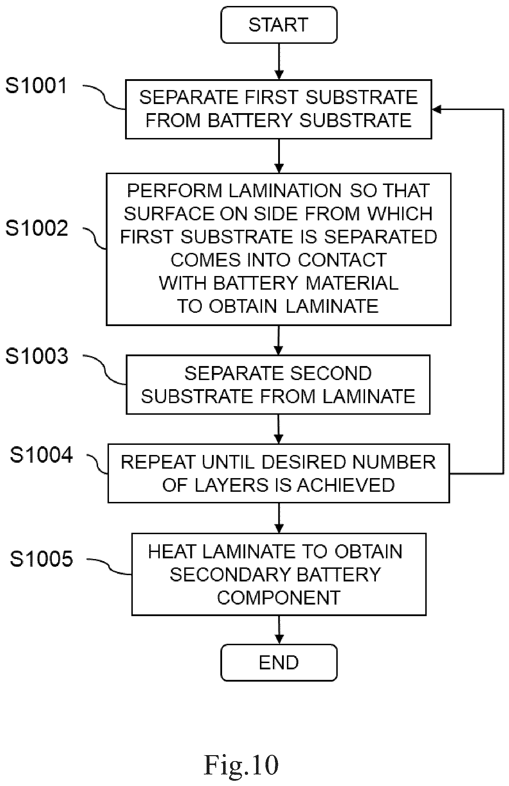

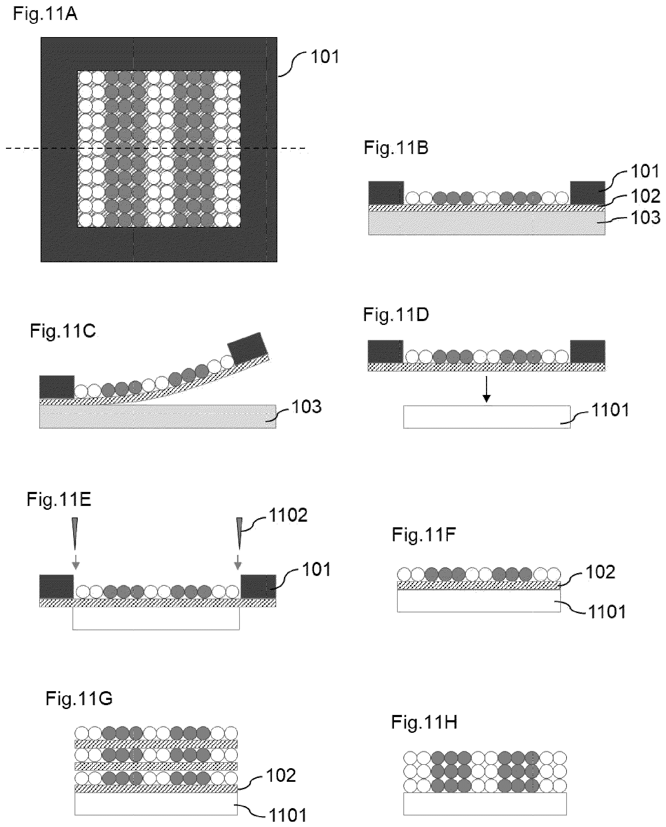

The method of producing a secondary battery component will be described. FIG. 10 is a diagram showing a flow of producing a secondary battery component using the adhesive layer having the configuration shown in FIGS. 1B, 1D and 1E described above. In the drawing, reference numerals S1001 to S1005 denote secondary battery component producing steps. FIGS. 11A to 11H are diagrams illustrating the secondary battery component producing process shown in FIG. 10.

In the drawing, reference numeral 1101 denotes a substrate on which a battery substrate is to be laminated, and reference numeral 1102 denotes a cutting tool for separating the second substrate 101 from the battery substrate. The substrate is, for example, the other battery substrate described above. That is, a battery substrate, a current collector solid electrolyte or an electrode can be used as the substrate.

Hereinafter, a process of producing a secondary battery component in which the plurality of battery substrates are laminated on a substrate 1101 will be described in detail with reference to FIG. 10 and FIGS. 11A to 11H.

The method of producing a secondary battery component includes a process of preparing the battery substrate.

In Step S1001, the first substrate is separated from the prepared battery substrate. That is, Step S1001 is a first separation process in which the first substrate is separated from one surface of the adhesive layer. FIG. 11A is a schematic diagram showing the top surface of the battery substrate, and FIG. 11B is a schematic diagram showing a cross section of the center (part indicated by the dotted line in FIG. 11A) of the battery substrate.

In the battery substrate shown in FIG. 11B, the particle layer comprising the first particle P1 and the second particle P2, which are battery materials, and the second substrate 101 are fixed onto the other surface of the adhesive layer 102. In addition, the adhesive layer 102 is adhered to one surface of the first substrate 103, and a release agent is applied to one surface of the first substrate 103 in advance. Therefore, the adhesive layer 102 and the first substrate 103 can be separated, and an attachment force on one surface of the adhesive layer 102 remains effective even after separation.

FIG. 11C shows the state in which the first substrate 103 is separated from the battery substrate. During separation, it is preferable to bend and separate the adhesive layer 102 to which the second substrate and the particle layer are bonded. In addition, the first substrate 103 may be bent and separated. In addition, the adhesive layer 102 and the first substrate 103 may be bent and separated by peeling them off.

That is, the first separation process preferably includes a process of bending at least one of the first substrate and the second substrate.

In Step S1002, the battery substrate from which the first substrate is separated is placed on and fixed to the substrate 1101. The substrate 1101 is, for example, the other battery substrate described above. That is, Step S1002 is a process in which an adhesive layer and another battery material are laminated so that one surface of the adhesive layer comes into contact with the other battery material to obtain a laminate.

FIG. 11D shows the state in which the battery substrate from which the first substrate 103 is separated in Step S1001 is laminated on the substrate 1101. The battery substrate and the substrate 1101 are fixed using the adhesive force on one surface of the adhesive layer 102. Thereby, the particle layer region of the battery substrate is fixed onto the substrate 1101 with the adhesive layer therebetween to obtain a laminate.

In Step S1003, the second substrate is separated from the laminate. That is, Step S1003 is a second separation process in which the second substrate is separated from the laminate.

FIG. 11E shows the state in which the second substrate is separated from the laminate, and FIG. 11F shows a cross-sectional view of the laminate after separation.

The method of separating the second substrate from the laminate is not particularly limited, and for example, a cutting tool 1102 is used to cut the boundary part between the particle layer on the adhesive layer 102 and the second substrate 101. FIG. 11E shows the state in which the substrate 1101 has the same shape as the particle layer, and a punch that matches the outer shape of the particle layer as the cutting tool 1102 is pushed from the side of the particle layer to the side of the substrate for separation. By separating them using the method shown in FIG. 11E, the second substrate and the adhesive layer adhered to the second substrate can be simultaneously separated from the particle region.

The cutting tool 1102 is not particularly limited, and in addition to the punch, tools that can cut the adhesive layer such as a cutter and scissors can be used. According to this process, as shown in FIG. 11F, a state in which one adhesive layer 102 and one particle layer are laminated on the substrate 1101 can be created.

In Step S1004, a desired number of the particle layers are laminated on the substrate 1101. The number of layers in the laminate is not particularly limited, and may be a desired number.

FIG. 11G shows the state in which Steps S1001 to S1003 are performed three times using the battery substrate and three adhesive layers and particle layers are laminated. In the above description of the processes of Steps S1001 to S1003, the process of laminating the particle layer on the substrate 1101 has been described, but the second and subsequent layers can be laminated by repeating the processes of S1001 to S1003 without change, and a desired number of layers can be achieved. For example, when a second layer is laminated, in the process of Step S1002, another battery substrate from which the first substrate is separated may be additionally laminated on a laminate in which one layer is laminated as shown in FIG. 11F.

In Step S1005, the laminate is heated. That is, Step S1005 is a process of heating the laminate to obtain a secondary battery component. According to the heat treatment, the adhesive layer in the laminate is removed.

FIG. 11H shows the state after the heat treatment. As shown in FIG. 11G, before the heat treatment, the adhesive layer 102 is located between the particle layers. When the adhesive layer is removed by the heat treatment, only the particle layer is laminated on the substrate 1101. In this manner, a secondary battery component having an arbitrary three-dimensional battery material pattern can be produced.

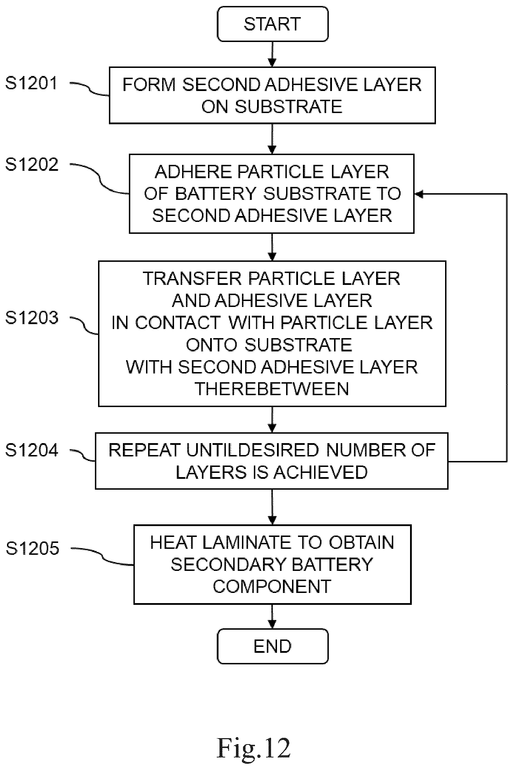

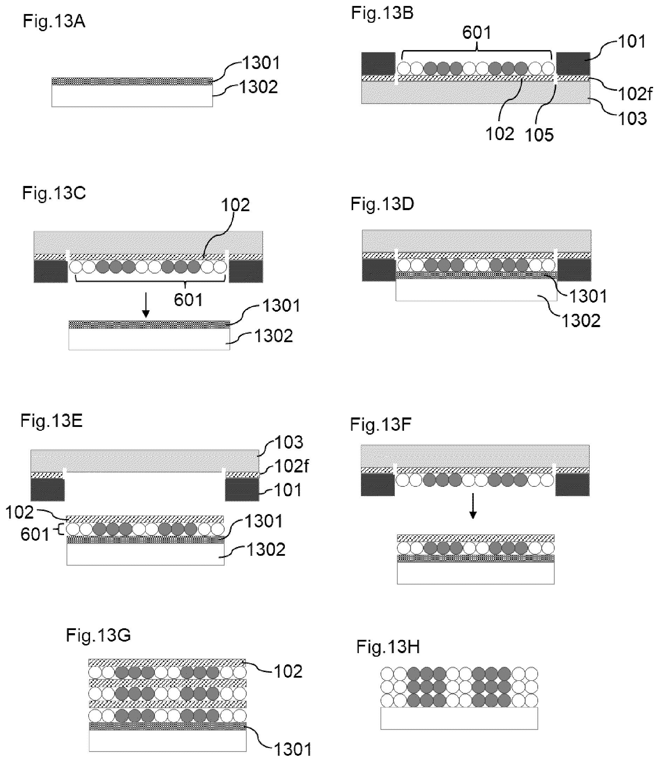

FIG. 12 is a diagram showing a flow of producing a secondary battery component using the adhesive layer having the configuration shown in FIG. 1F above. In the drawing, reference numerals S1201 to S1205 denote secondary battery component producing steps. FIGS. 13A to 13H are diagrams illustrating the secondary battery component producing process shown in FIG. 12.

Step S1201 is a process of forming a second adhesive layer 1301 on a substrate 1302 to be laminated. The state after Step S1201 is shown in FIG. 13A.

As the substrate, for example, an aluminum foil can be used. The thickness of the substrate is not particularly limited, and is preferably, for example, 10 to 50 µm. The substrate preferably has the same size as the region of the battery substrate where the particle layer is formed.

The second adhesive layer 1301 can be formed using the same material as the adhesive layer 102 in the same method.

FIG. 13B shows an electrode substrate having the slit 105 formed according to the above Steps S601 to S606 process. The particle layer 601 is formed on the surface of the adhesive layer 102 on the first substrate 103, and the second substrate 101 is arranged on the surface of the end 102f of the adhesive layer separated by the slit 105.

Step S1202 is a process of adhering the particle layer 601 of the battery substrate in FIG. 13B to the exposed surface of the second adhesive layer 1301.

In Step S1202, the particle layer 601 of the electrode substrate is brought closer to the second adhesive layer 1301 provided on the surface of the substrate 1302 in the arrow direction in FIG. 13C (FIG. 13C), and thus the second adhesive layer 1301 and the particle layer 601 are adhered to each other. The state after the adhesion is shown in FIG. 13D.

Step S1203 is a process of transferring the particle layer 601 and the adhesive layer 102 in contact with the particle layer 601 onto the substrate 1302 with the second adhesive layer 1301 therebetween. The state after Step S1203 is shown in FIG. 13E.

In Step S1203, the first substrate 103, the end 102f of the adhesive layer and the second substrate 101 are separated from the substrate 1302, the second adhesive layer 1301, and the battery substrate which are integrated in Step S1202.

In the battery substrate shown in FIG. 13B, the slit 105 is provided between the adhesive layer 102 to which the particle layer 601 is adhered and the end 102f of the adhesive layer. Due to the effect of the slit, only the particle layer 601 and the adhesive layer 102 to which the particle layer 601 is adhered are transferred onto the substrate 1302, and the first substrate 103, the second substrate 101 and the end 102f of the adhesive layer can be separated all at once. When the slit 105 is formed, a part including the second substrate can be easily separated without a large-scale cutting tool, and thus the productivity can be increased, and for example, a configuration suitable for a roll-to-roll production system can be formed.

Step S1204 is a process of laminating particle layers on the substrate 1302 until a desired number of layers is achieved. The state after Step S1204 is shown in FIG. 13G. When the above Steps S1202 and S1203 are repeated until a desired number of layers is achieved, the adhesive layers and the particle layers can be alternately laminated on the substrate. The number of layers is not particularly limited, and may be a desired number.

The laminate produced according to Steps S1201 to S1204 is different from the laminate produced according to Steps S1001 to S1005 (FIG. 11G) in that it has the second adhesive layer 1301 between the substrate 1302 and the particle layer 601, and has the adhesive layer 102 on the uppermost layer of the laminate. Since the second adhesive layer 1301 and the adhesive layer 102 are removed in the heat treatment process of Step S1205, finally, a structure having the same configuration as the structure (FIG. 11H) of the secondary battery produced according to Steps S1001 to S1005 is obtained.

In Step S1205, the laminate obtained through the processes up to Step S1204 is heated. Step S1205 is a process of heating the laminate to obtain a secondary battery component. According to the heat treatment, the adhesive layer 102 and the second adhesive layer 1301 in the laminate are removed.

In addition, battery materials other than the battery substrate can be laminated using the second adhesive layer 1301. For example, according to the battery structure, a current collector can be used as the substrate 1302, and an electrolyte, a counter electrode current collector and the like can be laminated with the second adhesive layer 1301 therebetween.

### Method of Producing Secondary Battery

A secondary battery can be produced by laminating an electrode, a current collector and an electrolyte, and as necessary, packaging the laminate with an aluminum laminate film, and molding and pressurizing it. As the materials for the electrode, the current collector and the electrolyte, the battery substrate and secondary battery components including the battery substrate and battery materials can be used.

### Examples

Hereinafter, the present invention will be described in more detail with reference to examples, but the present disclosure is not limited to these examples.

### Example 1

Materials used in this example will be described.

As first particle P1, a positive electrode material: lithium cobalt oxide (commercially available from Nippon Chemical Industrial Co., Ltd.: median diameter 7.1 µm) was used, and as second particle P2, a solid electrolyte: lithium borate (Li₃BO₃) (commercially available from Toyoshima & Co., Ltd.: median diameter 9.8 µm) was used. The median diameters of both particles were measured using a laser diffraction/scattering type particle diameter distribution measurement device (LA-960, commercially available from HORIBA, Ltd.).

A double-sided tape (Nitto Denko CS System: No. 5600) was used as the first substrate and the adhesive layer. A release liner (made of PET) of the double-sided tape corresponding to the first substrate had a thickness of 68 µm, and a total thickness of the pressure-sensitive adhesive of the double-sided tape corresponding to the adhesive layer and the substrate was 5 µm.

As the second substrate 101, a PET film (Lumirror 25 µm thick, commercially available from Toray Industries, Inc.) was used. When the first particle P1 and the second particle P2 were supplied to the plate, magnetic particles (The Imaging Society of Japan: standard carrier P02 median diameter 81 µm) were used.

As the plate 501, a glass intaglio produced by patterning borosilicate glass (HOYA: 5 mm thick) with a photoresist and then dry etching it was used. On the top surface of the plate 501, a line space with a width 10 µm (line depth: 5 µm) was formed as a particle arrangement pattern. As the stage 502, an aluminum stage was used.

The above materials were used to produce a battery substrate. In the produced battery substrate, a square particle region 601 with a side of 80 mm was arranged in the center of a double-sided tape with a side of 100 mm.

As the procedure, the release liner on one side of a 100 mm square double-sided tape was separated, and an 80 mm square particle region (particle layer) was formed in the center of the exposed pressure-sensitive adhesive. In addition, the second substrate 101 in the shape of a frame with a width of 10 mm was adhered and arranged to surround the periphery of the particle region 601 in four directions.

A battery substrate producing procedure is shown below.

In the particle region 601, the first particle P1 was adhered and arranged as battery material particles using a plate with a 10 µm line stripe pattern. Then, the plate was separated to form a pattern of the first particle P1 on the adhesive layer of the particle region.

Next, the first substrate (the release liner of the double-sided tape on the side opposite to the side on which the particle region was formed) was fixed to a fixing stand under a reduced pressure, the second particle P2 was supplied onto the adhesive layer using a charging roller (self-made) and adhered to the region of the adhesive layer to which the first particle P1 was not adhered.

Next, excess materials were removed with an air spray to produce a battery substrate 1. The battery substrate 1 was bendable and had a bending angle of 45° when bent.

A method of evaluating a battery substrate will be described.

### Method of Measuring Area Ratio

In order to calculate the area ratio of the region of the battery substrate 1, which was a continuous region without wrinkles where a particle pattern could be guaranteed, the produced battery substrate was imaged with a camera. From the captured image, using a function of calculating the area in a rectangular region in image processing software (Image J), the area of the region where the particle layer was formed and the area of the continuous region without wrinkles where the particle pattern could be guaranteed in the region were measured. From the obtained area, the area ratio of the continuous particle region without wrinkles to the area of the region where the particle layer was formed was calculated.

Ten battery substrates 1 were produced, the area ratio of the region without wrinkles was determined for each of the substrates by the above method, and the average value was calculated. The area ratio of the continuous particle region without wrinkles in Example 1 was 98.3 area%.

### Comparative Example 1

A positive electrode battery substrate of a comparative example will be described with reference to FIGS. 2A to 2E, FIGS. 5A to 5H, and FIG. 9B.

As Comparative Example 1, a battery substrate in which the second substrate 101 was no arranged on the adhesive layer was produced. That is, a battery substrate having only a first substrate, an adhesive layer, and a particle region 601 which is a particle layer on the adhesive layer was produced.

As a battery substrate of Comparative Example 1, a battery substrate 2 was produced using the same materials and method as in Example 1 except that Step S403 (process of placing the second substrate on the stage) shown in FIG. 5D was not performed.

In the battery substrate 2 produced in Comparative Example 1, wrinkles 602 occurred within the particle region 601 as shown in FIG. 9B. The particle arrangement became disordered in the part in which wrinkles occurred, and it was not possible to produce a battery material substrate in a desired pattern.

Regarding the battery substrate 2 of Comparative Example 1, the area ratio of the continuous region without wrinkles on the surface to the area of the region where the particle layer was formed was calculated by the above method.

In Comparative Example 1, the average value of the area ratio of the continuous particle region without wrinkles on the surface was 83.9 area%. Compared to Example 1, the proportion of the continuous particle region without wrinkles on the surface was smaller, and about 16 area% of the region where the particle layer was formed was a region where the pattern could not be guaranteed.

Table 1 shows the configurations and evaluation results of the battery substrates of Example 1 and Comparative Example 1.

**[Table 1]**

| | | Configuration of battery substrate | Evaluation |
|---|---|---|---|
| | | Presence of second substrate | Area ratio of particle region without wrinkles |
| Example 1 | Battery substrate 1 | Presence | 98.3% |
| Comparative Example 1 | Battery substrate 2 | Absence | 83.9% |

In the table, the "area ratio of particle region without wrinkles" is the ratio (area%) of the area of the continuous particle region without wrinkles on the surface to the area of the region where the particle layer is formed.

Based on these results, compared to Comparative Example 1, in the battery substrate 1 of Example 1, the occurrence of wrinkles and the like was curbed, and the arrangement pattern of arranged battery material particles was maintained. That is, by the method of producing a battery substrate, it is possible to produce a battery substrate in which battery material particles are arranged in an arbitrary pattern.

### Example 2

The process in which the battery material particle pattern was most likely to collapse was between Steps S1001 and S1002 in the secondary battery component producing process shown in FIG. 10. That is, the battery material particle pattern was most likely to collapse from when the first substrate was separated from the battery substrate until lamination with the battery material was performed.

In Example 2, it was verified whether the pattern of battery material particles on the adhesive layer could be retained after the first substrate 103 was separated from the battery substrate in the secondary battery component producing process. Here, the battery substrate used in Example 2 was the battery substrate 1 produced in Example 1.

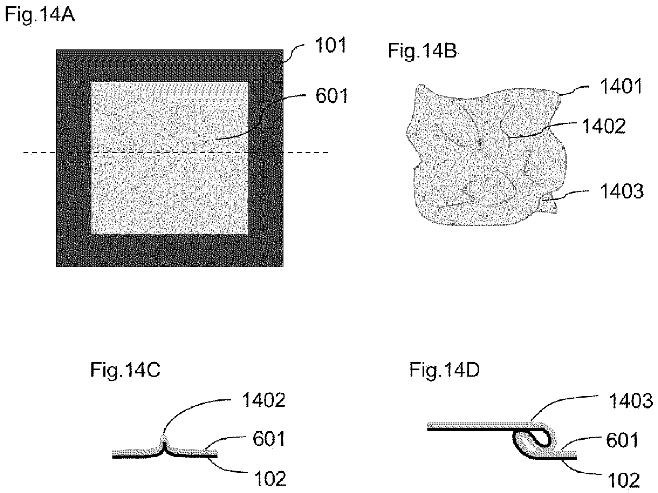

Here, in order to describe the evaluation method in Example 2, typical defects that occur in the battery substrate after the first substrate is separated will be described with reference to FIGS. 14B to 14D.

For example, as shown in FIG. 14B, it is thought that wrinkles and folds occurred in the adhesive layer from which the first substrate was separated and the particle layer arranged on the adhesive layer, and the outer shape 1401 of the particle region was not able to maintain the state before separation. For example, it was thought that wrinkles on the surface of the particle region indicated by reference numeral 1402 and adhesion (folds) indicated by reference numeral 1403 occurred.

FIG. 14C is an illustrative diagram schematically showing a cross section of the adhesive layer 102 and the particle layer 601 in which a wrinkle 1402 occurred. It was thought that wrinkles occurred when the adhesive layer 102 was bent or the bent adhesive layers 102 were bonded to each other.

FIG. 14D is an illustrative diagram schematically showing a cross section of the adhesive layer 102 and the particle layer 601 in which adhesions (folds) 1403 occurred. It was thought that the folds occurred when the adhesive layer 102 was bent, the adhesive layers were bonded to each other, or the particle layers 601 came into contact with each other.

In the secondary battery component producing process, when the above wrinkles or adhesions (folds) occurred, it was not possible to retain the arrangement pattern of the battery material particles. That is, when the above defects were reduced when the first substrate 103 was separated from the battery substrate, in the secondary battery component producing process, the battery substrate could be laminated when a desired battery material pattern was retained on the substrate 1101.

In Example 2, Steps S1001 and S1002 of the secondary battery component producing process shown in FIG. 10 were performed using the battery substrate 1. Then, the outer shape of the battery substrate from which the first substrate was separated was evaluated. Specifically, the following three items were evaluated.

### (1) Whether the outer shape was retained (the outer shape retention rate)

The first substrate was separated from the battery substrate 1. The same operation was performed on 10 battery substrates 1, and the proportion of battery substrates that retained the outer shape after separation was evaluated as the outer shape retention rate. Even if the battery substrate was bent when the first substrate was separated, it was determined that the outer shape was retained if the outer shape could be restored in the separated state.

The outer shape retention rate of Example 2 was 100%. That is, in all of the 10 battery substrates 1 produced, the outer shape after lamination was retained.

### (2) Wrinkle locations

After the first substrate was separated from the battery substrate 1, the number of wrinkles occurred on the surface of the particle layer was evaluated. The number of wrinkles was visually measured. The evaluation was performed on 10 battery substrates 1, and the average number of wrinkles was calculated.

The average number of wrinkle locations on 10 battery substrates 1 was 0.7.

### (3) Adhesion locations

After the first substrate was separated from the battery substrate 1, the number of adhesions between the adhesive layers was evaluated. The number of adhesions was visually measured. The evaluation was performed on 10 battery substrates 1, and the average number of adhesions was calculated.

The average number of adhesion locations on 10 battery substrates 1 was 0.3.

As described above, in Example 2 in which the battery substrate 1 was used, even after the first substrate 103 was separated and laminated, the outer shape of the particle region (particle layer) 601 was not disordered, and even if the outer shape became disordered, it was not able to be restored during lamination. In addition, there were almost no wrinkles or adhesions.

### Comparative Example 2

A positive electrode battery substrate of Comparative Example 2 will be described. A battery substrate 3 used in Comparative Example 2 was prepared by cutting the second substrate 101, the adhesive layer 102 adhered to the second substrate 101 and the first substrate from the battery substrate 1 produced in Example 1, resulting in the state shown in FIG. 2B. That is, the battery substrate 3 having only a particle layer, an adhesive layer on which the particle layer was formed and the first substrate was used in Comparative Example 2.

Although the second substrate in the battery substrate 3 was removed, the battery substrate 1 used was produced by the method of producing a battery substrate of the present disclosure, and thus the battery substrate 3 before evaluation was free of defects such as wrinkles.

In Comparative Example 2, Steps S1001 and S1002 of the secondary battery component producing process shown in FIG. 10 were performed using the battery substrate 3. Then, the outer shape of the battery substrate from which the first substrate was separated was evaluated. All defects in the particle region 601 that occurred during the evaluation were thought to have been caused by the process of separating the first substrate from the battery substrate and laminating it with the battery material.

The following three items of the battery substrate 3 were evaluated in the same method as in Example 2.

### (1) Whether the outer shape was retained (the outer shape retention rate)

The outer shape retention rate of the battery substrate 3 was 20%. That is, in two of the produced 10 battery substrates 3, the outer shape was retained after the first substrate was separated.

### (2) Wrinkle locations

The average number of wrinkle locations on 10 battery substrates 3 was 20 or more.

### (3) Adhesion locations

The average number of adhesion locations on 10 battery substrates 3 was 5 or more.

In the battery substrate 3, countless wrinkles and adhesions occurred, and the outer shape was not sufficiently retained after the first substrate was separated. That is, in the secondary battery component producing process using the battery substrate 3 of Comparative Example 3, it was almost not possible to maintain the shape of the particle region 601 unchanged from the state before the first substrate 103 was separated.

Table 2 shows the configurations and evaluation results of the battery substrates of Example 2 and Comparative Example 2.

**[Table 2]**

| | | Configuration of battery substrate | Evaluation | | |
|---|---|---|---|---|---|
| | | Presence of second substrate | Outer shape retention rate | Wrinkle occurrence locations | Adhesion occurrence locations |
| Example 2 | Battery substrate 1 | Presence | 100% | 0.7 locations | 0.3 locations |
| Comparative Example 2 | Battery substrate 3 | Absence | 20% | 20 or more locations | 5 or more locations |

### Example 3

### Production of Battery Substrate

The surface of a 75 µm PET film (Lumirror, commercially available from Panac Corporation) as a first substrate was treated with a release treatment agent (KNS-3051, commercially available from Shin-Etsu Chemical Co., Ltd.), and an acrylic adhesive (1429DT, commercially available from Soken Chemical & Engineering Co., Ltd.) was applied to the treated surface to a film thickness of 5 µm to form an adhesive layer. In addition, a 40 µm PET film (Lumirror, commercially available from Panac Corporation) as a fourth substrate was subjected to the same release treatment, and arranged on the adhesive layer so that the treated surface of the fourth substrate was in contact with the adhesive layer formed on the first substrate.

Next, a square material with an outer shape of 100 mm was extracted from an original fabric including the first substrate, the adhesive layer, and the fourth substrate using a laser processing machine (VLS2.30, commercially available from Universal Laser Systems). A half-cut was made to form a region corresponding to an 80 mm square particle region in the center of the extracted material on the side of the fourth substrate. In addition, on the side of the first substrate, a half-cut was made 3 mm inward from each side of the material to form a 94 mm square slit. Cutting conditions are as follows.
Extraction cutting conditions: power setting 60%, speed 93%, points/inch 500
Fourth substrate side half-cut conditions: power setting 12.3%, speed 93%, pitch 200
First substrate side half-cut conditions: power setting 41%, speed 93%, pitch 500

### Particle Arrangement Process

Next, an 80 mm square region in the center of the fourth substrate was removed, and the surface of the adhesive layer in the particle region was exposed. As in Example 1, the first particle P1 filled into the plate was adhered to the exposed surface of the adhesive layer, the plate was then separated, and thus the pattern of the first particle P1 on the plate was transferred onto the adhesive layer.

Next, the circumferential part (region 3 mm from the end) of the first substrate was separated along the half-cut to expose the adhesive layer. Then, the material was fixed to a fixing stand, and the second particle P2 was arranged on the adhesive layer in the same manner as in Example 1 to produce a battery substrate 4.

When the produced battery substrate was separated from the fixing stand, the adhesive layer exposed in a region 3 mm from the end of the first substrate remained on the fixing stand and was removed from the battery substrate. The battery substrate 4 was bendable and had a bending angle of 40° when bent.

### Comparative Example 3

A battery substrate 5 was produced in the same manner as in Example 3 except that a half-cut process was not performed on the first substrate and the fourth substrate. That is, when the entire surface of the fourth substrate was separated, the first particle P1 and the second particle P2 were arranged on the entire surface of the adhesive layer to produce the battery substrate 5.

Table 3 shows the evaluation results of the battery substrate 4 and the battery substrate 5.

**[Table 3]**

| | | Configuration of battery substrate | Evaluation |
|---|---|---|---|
| | | Presence of fourth substrate | Area ratio of region without wrinkles |
| Example 3 | Battery substrate 4 | Presence | 99.7% |
| Comparative Example 3 | Battery substrate 5 | Absence | 90.5% |

### Example 4

### Production of Laminate of Battery Substrate 4

An aluminum foil having a thickness of 30 µm was used as a substrate to be laminated. An acrylic adhesive (1429DT, commercially available from Soken Chemical & Engineering Co., Ltd.) was applied to one side of the substrate to a film thickness of 5 µm to form a second adhesive layer. The particle layer of the battery substrate 4 produced in Example 4 was layered and attached onto the formed second adhesive layer. Then, the first substrate and the fourth substrate were separated to transfer the particle layer onto the second adhesive layer.

The above process was repeated 10 times to produce a battery substrate laminate 4 having 10 particle layers. Here, the battery substrates were positioned during lamination by a method of abutting two outer sides against three fixing pins.

### Comparative Example 4

### Production of Laminate of Battery Substrate 5

In the same manner as in Example 4, a second adhesive layer was formed on a substrate. The particle layer of the battery substrate 5 produced in Comparative Example 3 was layered and attached onto the second adhesive layer. Then, the first substrate was separated to transfer the particle layer onto the second adhesive layer.

The above process was repeated 10 times to produce a battery substrate laminate 5 having 10 particle layers. The battery substrates were positioned during lamination in the same method as in Example 4.

Table 4 shows the evaluation results of the battery substrate laminate 4 and the battery substrate laminate 5.

**[Table 4]**

| | | Configuration of battery substrate | Evaluation | | |
|---|---|---|---|---|---|
| | | Presence of fourth substrate | Outer shape retention rate | Wrinkle occurrence locations | Adhesion occurrence locations |
| Example 4 | Battery substrate 4 | Presence | 100% | 0.1 locations | 0 locations |
| Comparative Example 4 | Battery substrate 5 | Absence | 92.4% | 2.5 locations | 1.4 locations |

In the secondary battery component producing process, after the first substrate was separated, the particle region 601 became a thin layer of about 10 µm together with the adhesive layer. Therefore, as in Comparative Example 2, it was difficult to maintain the structure only in the region where the particle layer was formed. In addition, when the first substrate was separated, the adhesive layer was charged by separation, and thus the adhesive layer was easily charged after separation. As a result, several locations within the plane were attracted to each other, which easily caused adhesions and wrinkles. Therefore, when no second substrate was provided, adhesions and wrinkles occurred, and restoring was not possible.

On the other hand, in the battery substrate and the secondary battery component of the present disclosure, the second substrate 101 fixed to the adhesive layer 102 was included as a member that can independently maintain the structure. Therefore, when the particle region 601 and the second substrate are integrated with the adhesive layer 102 therebetween, wrinkles and adhesions did not occur, and the shape of the particle region 601 could be retained.

As described above, the above method can be said to be a method with which a secondary battery component having an arbitrary three-dimensional battery material pattern can be produced. In addition, the battery substrate of the present disclosure can be said to be a battery substrate that can retain an arrangement pattern of three-dimensionally arranged battery material particles. In addition, when the above battery substrate is used, it is possible to obtain a secondary battery component in which wrinkles and adhesions are less likely to occur in the production process.

Various embodiments have been described in detail above but it will be understood that the present disclosure is not limited to these embodiments and encompasses all modifications, variants, alternatives and equivalents falling within the scope of the appended claims.

## Claims

1. A battery substrate applied to a secondary battery, comprising:
a first substrate (103) comprising a resin;
an adhesive layer (102) having one surface adhered to the first substrate;
a particle layer (601) comprising at least one selected from the group consisting of a solid electrolyte, an active material and a current collector material and disposed on the other surface opposite to the one surface of the adhesive layer (102) ; and
a second substrate (101) disposed in a region of the other surface where the particle layer (601) is not disposed,
wherein the second substrate (101) is disposed so as to support a periphery of a region where the particle layer (601) is disposed in at least two directions.

2. The battery substrate according to claim 1,
wherein the adhesive layer comprises
one layer having the one surface,
an other layer having the other surface, and
a third substrate positioned between the one layer and the other layer.

3. The battery substrate according to claim 2,
wherein the other layer is located between the second substrate and the third substrate, and
the particle layer and the second substrate are both adhered to the other surface.

4. The battery substrate according to claim 2,
wherein the second substrate is arranged in a region of the adhesive layer where the other layer is not located so that the second substrate comes into contact with the third substrate,
the particle layer is adhered to the other surface, and
the second substrate is adhered to the third substrate.

5. The battery substrate according to any one of claims 1 to 4,
wherein the second substrate comprises a resin material or a metal material.

6. The battery substrate according to any one of claims 1 to 5,
wherein the second substrate comprises any of polyethylene terephthalate, kapton, an acrylic resin, polycarbonate, iron, copper and aluminum.

7. The battery substrate according to any one of claims 1 to 6,
wherein the second substrate has a thickness of 10 µm or more.

8. The battery substrate according to any one of claims 1 to 7,
wherein extension of the second substrate in a planar direction is less than extension of the adhesive layer in a planar direction.

9. The battery substrate according to any one of claims 1 to 8,
wherein the second substrate has a window-like or notch-like shape, and
the shape supports a periphery of a region where the particle layer is formed in at least two directions.

10. The battery substrate according to any one of claims 1 to 9,
wherein the battery substrate is bendable and a bending angle when bent is 30° or more.

11. The battery substrate according to any one of claims 1 to 10,
wherein the area ratio of a region in which at least one selected from the group consisting of the solid electrolyte, the active material and the current collector material is arranged in a region where the particle layer is disposed is 80 area% or more.

12. The battery substrate according to any one of claims 1 to 11,
wherein the solid electrolyte comprises at least one selected from the group consisting of lithium lanthanum zirconate, lithium aluminum germanium phosphate, lithium aluminum titanium phosphate, Li₃BO₃, Li_{5.9}Yb_{0.81}La_{0.09}Zr_{0.1}(BO₃)₃ and products obtained by treating the above materials with a planetary ball mill.

13. The battery substrate according to any one of claims 1 to 12,
wherein the active material comprises at least one selected from the group consisting of lithium cobalt oxide, lithium iron phosphate, lithium vanadium phosphate, lithium cobalt phosphate, a ternary positive electrode material, graphite, Si and lithium titanate.

14. The battery substrate according to any one of claims 1 to 13,
wherein the current collector material comprises at least one selected from the group consisting of natural graphite, graphite, acetylene black, ketjen black, channel black, furnace black, lamp black, carbon black, fluorinated carbon powder, carbon fibers, carbon nanotubes, metal fiber, gold, platinum, silver, aluminum, zinc oxide, titanium oxide and a phenylene dielectric.

15. The battery substrate according to any one of claims 2 to 14,
wherein a third substrate positioned between the one layer and the other layer comprises any one of polyethylene terephthalate, polypropylene, polyvinyl alcohol, and polyethylene.

16. A method of producing the battery substrate according to any one of claims 1 to 15, the production method comprising:
a process of arranging a first particle P1 on a plate-like member;
a process of arranging the second substrate in a region of the plate-like member where the first particle P1 is not arranged;
a process in which the other surface of the adhesive layer is bonded so that the other surface comes into contact with at least the first particle P1 to obtain a structure in which the first particle P1, the second substrate, the adhesive layer and the first substrate are integrated together;
a separation process in which the structure is separated from the plate-like member; and
a process of obtaining a battery substrate, in which, a second particle P2 is arranged in a region of the separated structure where the first particle P1 is not arranged on the adhesive layer,,
wherein the first particle P1 and the second particle P2 are the solid electrolyte, the active material or the current collector material.

17. The method of producing a battery substrate according to claim 16,
wherein the separation process includes a process of bending the structure.

18. A method of producing the battery substrate according to any one of claims 1 to 15, the production method comprising:
a process of arranging the second substrate on the other surface of the adhesive layer;
a process of arranging the first particle P1 on a plate-like member;
a process in which a region on the other surface of the adhesive layer where the second substrate is not arranged is bonded so that the region comes into contact with at least the first particle P1 to obtain a structure in which the first particle P1, the second substrate, the adhesive layer and the first substrate are integrated together;
a separation process in which the structure is separated from the plate-like member; and
a process in which, in the separated structure, the second particle P2 is arranged in a region on the adhesive layer where the first particle P1 is not arranged to obtain a battery substrate,
wherein the first particle P1 and the second particle P2 are the solid electrolyte, the active material or the current collector material.

19. The method of producing a battery substrate according to claim 18,
wherein the separation process includes a process of bending the structure.

20. A secondary battery component comprising the battery substrate according to any one of claims 1 to 15, and a battery material,
wherein the battery material is at least one selected from the group consisting of the battery substrate, a current collector, a solid electrolyte and an electrode.

21. A method of producing a secondary battery component, comprising:
a process of preparing the battery substrate according to any one of claims 1 to 15;
a lamination process in which the battery substrate and a battery material are laminated to obtain a laminate; and
a process of heating the laminate to obtain a secondary battery component,
wherein the battery material is at least one selected from the group consisting of the battery substrate, a current collector, a solid electrolyte and an electrode.

22. The method of producing a secondary battery component according to claim 21,
wherein the battery material is the battery substrate.

23. The method of producing a secondary battery component according to claim 21,
wherein the battery material is a current collector, a solid electrolyte or an electrode.

24. The method of producing a secondary battery component according to any one of claims 21 to 23,
wherein the lamination process includes
a first separation process in which the first substrate is separated from the one surface of the battery substrate,
a process in which the adhesive layer and the battery material are laminated so that the one surface comes into contact with the battery material to obtain the laminate, and
a second separation process in which the second substrate is separated from the laminate.

25. The method of producing a secondary battery component according to claim 24,
wherein the first separation process includes a process of bending at least one of the first substrate and the second substrate.
